# EUROPEAN PATENT APPLICATION

(11) **EP 3 441 849 A1**
(43) Date of publication of application: **13.02.2019**
(21) Application number: 17185558.8
(22) Date of filing: 09.08.2017
(51) Int. Cl.: G06F 3/01, G06F 1/16, G06F 3/03, G06F 3/0346, G06F 3/0484

(54) **POINTING INPUT DEVICE FOR PERSONAL COMPUTER BASED ON FINGERS ' MOVEMENTS**

(71) Applicant: Nagravision S.A., 1033 Cheseaux-sur-Lausanne (CH)
(72) Inventor: WENDLING, Bertrand, 01220 Divonne-les-Bains (FR)
(74) Representative: Korenberg, Alexander Tal

(57) **Abstract**

A pointing input device for personal computer based on fingers movements. The pointing input device comprises at least one sensor configured to detect finger movements and transmit to the personal computer digital signals enabling control of a cursor on a display screen of the personal computer according to the finger movements. The at least one sensor is further configured to detect a curvature state of at least one finger and a transition from a bent finger state to a straight finger state and inversely and to activate a pointing input device mode when the at least one sensor detects a transition from the bent finger state to the straight finger state. The straight finger state enables control of the cursor on the display screen according to movement of the at least one finger in the straight finger state. The pointing input device mode is deactivated when the at least one sensor detects a transition from the straight finger state to the bent finger state. The at least one sensor may be in form of a finger glove or ring or in form of a camera using markerless motion capturing techniques applied to the fingers moving within the visual field of the camera.

## Description

### Introduction

The present disclosure relates to a pointing input device for personal computers based on finger movements.

### Technical background

As various small sensors have been recently developed, many electronic devices have been adapted to provide an improved user comfort. The pointing input devices such as computer mice which are the main data input devices for a personal computer are also concerned by this recent development of small sensors. The functions and the shape of a computer mouse have evolved from a first model of ball mouse to an optical or laser mouse without the drawbacks of the ball mouse. The cable connection between the computer and the mouse has been removed to increase freedom of movement on any flat surface of a laser mouse for example. These mice moving generally on a flat surface may present some drawbacks in particular in narrow working spaces where mouse movement surfaces are available with difficulty.

Solutions to reduce the drawbacks of the existing mice have been developed by rendering the mice independent of an operating surface. For example:
Document US2010/0328205A1 discloses a "magic finger mouse" using a glove position and a physical touch button to be pressed by the thumb to activate the left button for a left click function. A drawback of this "magic finger mouse" is that it requires the whole hand to be put in a glove that is not very convenient when typing on a keyboard.

Document US6870526B2 discloses a glove mouse with virtual tracking ball based on bending sensors in order to activate the pointer in one direction per finger. A tilt sensor is mounted on the glove metacarpus, of which the roll angle of the hand is detected to determine the moving orientation of the cursor. Two pairs of bending sensors are mounted on the thumb tube and the index finger tube, each pair of the sensors is used to detect a bending angle of the corresponding finger. The bending of the thumb or the index finger at a time is used to move the cursor in the negative or the positive direction along the located orientation line. The data glove for cursor control is operated as a virtual mouse with a virtual tracking ball.

Document US2011/0199305A1 discloses a mouse controlled by movements of fingers in the air. The mouse pointer to be worn on a finger comprises a mouse main body equipped with a movement sensing unit and a control unit therein. A touch sensing unit, provided in a right side and a left side of the mouse main body is configured to serve as a right click or a left click of the mouse. A mouse pointer operation start/end unit provided in a side of the mouse main body is configured to start/end the operation of a mouse pointer. The mouse is fixedly attached to the finger and controlled through the movement of the finger in the air.

Document US2015/0277559A1 discloses a ring that can be used as a mouse. A user controls an external electronic device with a finger ring mounted touchscreen that includes a computer processor, wireless transceiver, and rechargeable power source. The ring worn on a first finger receives an input from a second finger, selects one of a plurality of touch events associated with the input, and wirelessly transmits a command associated with the touch event to the external electronic device.

It is also known to use a finger mouse controlled by movements of the finger in the air. A Bluetooth mouse worn on the index finger allows performing all commands of a personal computer without leaving the keyboard. By maintaining a button pressed with the thumb, the movements performed by the index finger in the air are converted into moves of a cursor on a display screen. Two other buttons are available on a side of the finger mouse for carrying out left and right click by pressing with the thumb.

A computer mouse is generally separated from the keyboard. The user hand has to leave the keyboard to grab the mouse on the side of it and move it to a desired place as for example to insert some text and come back to the keyboard and type the text to be inserted. This is not only time consuming, but can create pain due to the continuous movements and constraints on the arm and wrist that goes up and down. The purpose of this disclosure is to create a new type of mouse to avoid this movement and pain it creates by removing the need to leave the keyboard when using the mouse.

### Summary

An object of the present application relates to a pointing input device for personal computer based on fingers movements. The pointing input device comprises at least one sensor configured to detect finger movements and transmit to the personal computer digital signals enabling control of a cursor on a display screen of the personal computer according to the finger movements. The at least one sensor is further configured to detect a curvature state of at least one finger and a transition from a bent finger state to a straight finger state and inversely, and to activate a pointing input device mode when the at least one sensor detects a transition from the bent finger state to the straight finger state. The straight finger state enables control of the cursor on the display screen according to movement of the at least one finger in the straight finger state. The pointing input device mode is deactivated when the at least one sensor detects a transition from the straight finger state to the bent finger state.

The disclosed pointing input device operates as a computer mouse that is not to be hold with fingers as a conventional computer mouse, but the cursor on the display screen moves by moving one finger over the keyboard for example.

According to an embodiment, the sensor configured to detect finger curvature state and finger movements may be integrated in a small finger glove or a ring arranged on the finger articulation. When typing on a keyboard, the fingers are generally bent over the keyboard. The pointing input device mode is activated when the sensor detects a transition from the finger bent state to the finger straight state. Once the finger is straight, move control of the cursor according to finger movements is enabled.

Right and left click buttons may be handled in a similar way by using for example the index finger and the ring finger while the medium finger is used to control cursor movement. The sensor may be programmed to enable right and left click function when the concerned fingers pass from the bent state to the straight state.

According to a further embodiment, the sensor may be in form of a camera directed to the user's fingers configured to detect a curvature state of at least one finger and a transition from a bent finger state to a straight finger state and inversely. This embodiment allows to release the fingers from any accessory such as a glove or ring that can be lost or out of order due to an empty battery for example.

### Brief description of the drawings

The following detailed description refers to the attached drawings in which:
Figure 1 shows an embodiment of the pointing input device comprising finger gloves including sensors worn on fingers.
Figure 2 shows a block schematic of the pointing input device
Figure 3 shows an embodiment of the pointing input device comprising a separate camera associated with a personal portable computer. The camera captures and analyzes movement of the user's fingers.
Figure 4 shows an embodiment of the pointing input device comprising a camera integrated in a personal portable computer. The camera captures and analyzes movement of the user's fingers.

### Detailed description

### Sensor in form of finger glove or ring

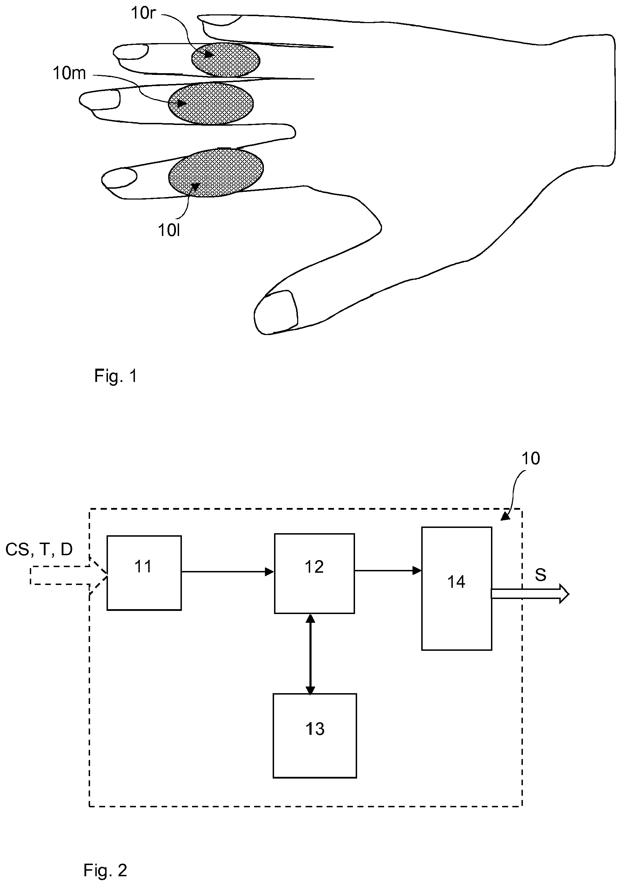

According to an embodiment as shown in Figure 1, the pointing input device for personal computer may be in a form of one or more finger gloves or rings depending on the functions attributed to the pointing input device. In this example, the functions of a conventional computer mouse are emulated by three fingers. A first finger controls the cursor on the display screen while a second finger and a third finger respectively enable left and right click functions.

The pointing input device may comprise a first finger glove or ring worn on a first finger, the sensor 10m being configured to detect a curvature state and a transition from a bent to straight state of the first finger. The detected curvature state enables movement control of the cursor on the display screen when the first finger is in a straight state. A second finger glove or ring may be worn on a second finger, the sensor 10l being configured to detect transition from a bent to straight state of the second finger. The detected transition activates the left click function when the second finger moves from a bent to a straight state. A third finger glove or ring may be worn on a third finger, the sensor 10r being configured to detect transition from a bent to straight state of the third finger. The detected transition activates the right click function when the third finger moves from a bent to a straight state.

Various shapes, designs, and dimensions may be possible for the pointing input device in form of a glove or ring wearable on fingers. The finger glove or ring may be wearable at least over the articulation between the middle and proximal phalanx of a finger. According to a further embodiment the finger glove or ring may cover the finger entirely. The pointing input device may also be in form of a ring worn on the finger around the middle or proximal phalanx for avoiding to block movement of the articulation. The ring may include comprise a top part extending over the finger articulation to facilitate detection of the finger curvature.

The pointing input device may comprise only one finger glove or ring configured to detect a curvature state and a transition from a bent to straight state of the middle finger. When the finger is straight cursor movement on the display screen is controlled by moving the finger. The right and left click functions may each be enabled by a specific key on the computer keyboard.

As the left click function is the most used on a computer mouse, the pointing input device may comprise two finger gloves or rings. A first finger glove or ring is configured to move the cursor on the display screen while the second finger glove or ring is configured to enable the left click function. In this case, the right click function is enabled by a specific key on the computer keyboard.

Figure 2 shows a block schematic of the sensor 10 comprising a sensing module 11, a processor 12, a flash type non-volatile memory 13, and a communication module 14.

The sensing module 11 detects and converts into digital data the curvature state of the fingers, transitions from a finger bent state to a straight state and inversely, and movements of a straight finger. This digital data is forwarded to the processor 12 associated with the memory 13 in order to be processed and output towards the communication module 14.

A micro-battery, not shown, integrated in the sensor 10 powers the different modules of the sensor 10.

The communication module 14 is configured to transmit to the personal computer digital signals S provided by the processor 12. The role of the processor 12 is to interpret and process the digital data provided by the sensing module 11 in accordance to a software program stored in the memory 13. The processor 12 outputs a resulting digital processed signal ready to be transmitted by the communication module 14 to the personal computer. This resulting digital processed signal comprises data representing at least the curvature state and spatial movement vectors data of the finger during its movement when the pointing input device mode is activated.

The spatial movement vectors data comprise position coordinates, speed and acceleration data corresponding to the finger movements. The graphic processor of the personal computer converts the received spatial movement vectors data into corresponding movements of the cursor on the display screen.

When the curvature state detected by the sensing module 11 corresponds to a bent finger state, the pointing input device mode is disabled while the transition of the curvature state from the bent finger state to the straight finger state enables the pointing input device mode.

The straight finger allows movement control of the cursor according to corresponding movements of the finger in a space above the keyboard for example. When the detected curvature state returns from the straight finger state to the bent finger state, the pointing input device mode is disabled again to prevent erratic cursor movements when typing on the keyboard.

The communication module 14 may preferably be configured to transmit the digital data via a wireless link using laser, radio frequency or infrared technology. The personal computer comprises a receiver module adapted to the used transmission link technology.

The sensing module 11 may include a piezo electric detector configured to detect the curvature state CS of the finger and transitions T from the bent finger state to the straight finger state and inversely. The piezo electric detector measures a pressure exerted by the top part of the finger articulation. The measured pressure has a predefined value when the finger is bent while when the finger is straight, the measured pressure value has a minimum value almost zero. The transition T measured by the piezo electric detector corresponds to a peak variation of the pressure value in a short time such as a fraction of a second from the predefined value to the minimum value and inversely. This peak variation is then interpreted by the processor 12 as a switching from the pointing input device disabled mode to the pointing input device enabled mode and inversely. Small pressure value variations below the peak variations produced when typing on the keyboard are filtered by the sensing module 11 in order to be ignored by the processor 12.

An acceleration detector or accelerometer integrated in the sensing module 11 allows detecting finger movements and producing input data D for generating the spatial movement vectors by the processor 12 when the detected curvature state CS of the finger corresponds to the finger straight state. The detected finger movements input data D are then forwarded to the processor 12 for converting into spatial movement vectors data that are forwarded to the communication module 14 for transmitting to the personal computer.

In the case where the pointing input device comprises more than one finger glove or ring, the sensor 10 of each finger glove or ring may have the same hardware configuration as schematically illustrated in figure 2 even if their functions are different.

The finger gloves or rings may be wearable at least over the articulation between the middle and proximal phalanx of the first, second and third finger.

In the example of the pointing input device shown in figure 1, the first finger glove or ring is worn on the middle finger (cursor control), the second finger glove or ring is worn on the index finger at the left of the middle finger (left click function) and the third finger glove or ring is worn on the ring finger at the right of the middle finger (right click function).

The sensor of the finger glove or ring 10m is configured to move the cursor when the middle finger is straight while the sensors of the finger gloves or rings 10l and 10r on the index and ring fingers are configured to perform the left and right click functions by detecting transition from the finger bent state to the finger straight state. The sensors of the finger gloves or rings may be programmable for a specific function depending on which finger they are to be worn. The program stored in the non-volatile flash memory 13 associated with the processor 12 may be set up for the specific functions of the sensors during an initialization phase of the pointing input device.

The finger gloves or rings may be worn on other fingers as well as on the fingers of the right or left hand depending on user preferences.

According to a further example, the cursor control finger glove or ring may be worn on the index finger of the right hand while the left and right click finger gloves or rings may be worn respectively on the middle finger and the index finger of the left hand.

According to an embodiment, the sensor 10 of the finger glove or ring may additionally comprise a small touch pad on left and right side to be touched with neighbor fingers for performing left and right click functions. This embodiment may be an alternative of the embodiment where one finger glove or ring is used for cursor movement and left and right click functions are performed by specific keys on the keyboard.

### Sensor in form of a camera

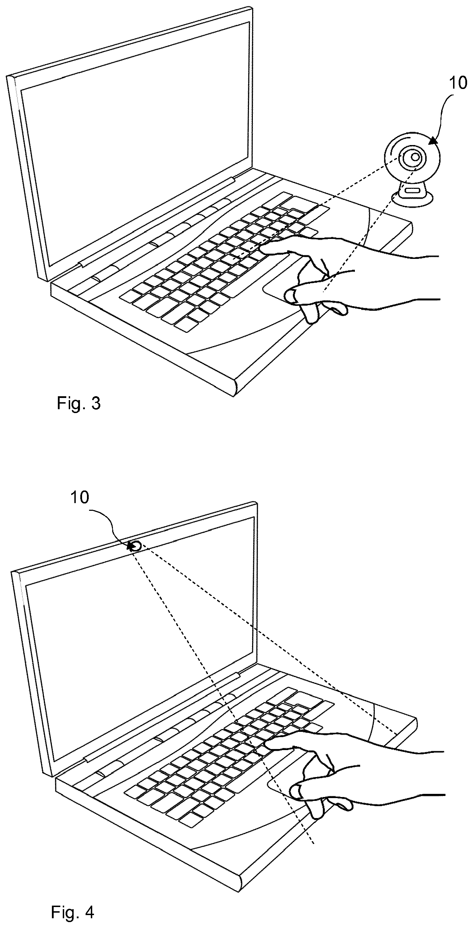

A further embodiment of the pointing input device may comprise a sensor in form of a camera directed to the user's fingers as represented on figure 3. The camera may comprise a Charge-Coupled Device CCD or a Complementary Metal Oxide Semiconductor CMOS image sensor as sensing module 11. The processor 12 may be further configured to analyze and process the images received by the sensing module 11 for determining the curvature state of at least one finger and transition from a bent to a straight finger state and inversely and for determining, based on results of the analysis, spatial movement vectors data of a straight finger.

In this example, the camera is independent of the personal computer. As in the preceding examples of the pointing input devices using a finger glove or ring, the camera may comprise a communication module 14 configured to communicate with the personal computer via a wireless link using laser, radio frequency or infrared technology.

The camera may also be connected to the personal computer via a wired link using a Universal Serial Bus USB port, a High Definition Multimedia Interface HDMI port or any other port supporting video data signals.

As in the preceding examples of the pointing input devices using a finger glove or ring, the click function may either be performed by a specific key on the keyboard or by detecting with the camera the transition from a bent state to a straight state of a finger not used for cursor movement.

The camera may preferably use markerless motion capturing techniques applied to the fingers moving within the visual field of the camera. For example, a technique described in document EP2317474A1 may be used. The markerless motion capturing apparatus using a single camera may track a pose and a motion of the fingers from an image, inputted from the camera, without using markers or micro-sensors arranged on the fingers.

According to a further embodiment shown by figure 4, the camera or webcam generally integrated in an upper edge of the display screen of a portable personal computer may be used instead of the independent camera of figure 3. In this case, the processor 12 and the associated memory 13 are part of the central processor and memory of the personal computer. The communication module 14 includes a communication interface associated with the camera using a data bus of the personal computer.

This embodiment using cameras applying markerless motion capturing techniques has the advantage to release the fingers from any additional accessory such as a glove or ring or any other marker that can be sometimes incommodious.

According to a further embodiment, more than one camera may be used as sensors to detect and determine curvature state, position and movements of the fingers. The cameras located at different positions near the keyboard of the personal computer may use techniques based on tri-dimensional images capturing, analysis and processing to track pose and motion of the fingers.

Whatever the embodiment of the pointing input device in form of a finger glove or ring and camera, the sensor 10, may be programmed to delay the detection of the transition from the finger bent state to the finger straight state and inversely.

In fact, a timer may be set for determining how long a finger is straight after having been bent or inversely. For example, when a finger is straight during one second or less, the pointing input device mode is not activated or a click function is not performed. The timer thus prevents unnecessary switching to pointing input device mode or redundant clicks when fingers are straight for a short time and bent again. Although embodiments of the present disclosure have been described with reference to specific example embodiments, it will be understood that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived there from, such that structural and logical substitutions and changes may be made without departing from the scope of this disclosure. The detailed description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "disclosure" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A pointing input device for personal computer based on fingers movements, the pointing input device comprises at least one sensor (10) configured to detect finger movements and transmit to the personal computer digital signals enabling control of a cursor on a display screen of the personal computer according to the finger movements, the pointing input device is **characterized in that**
the at least one sensor (10) is further configured to detect a curvature state of at least one finger and a transition from a bent finger state to a straight finger state and inversely, and to activate a pointing input device mode when the at least one sensor (10) detects a transition from the bent finger state to the straight finger state, said straight finger state enabling control of the cursor on the display screen according to movement of the at least one finger in the straight finger state, the pointing input device mode being deactivated when the at least one sensor (10) detects a transition from the straight finger state to the bent finger state.

2. The pointing input device according to claim 1 **characterized in that** the pointing input device comprises at least one additional sensor configured to detect a curvature state and a transition from a bent to straight state and inversely of the finger, the detected transition activating a click function when the finger moves from a bent to a straight state.

3. The pointing input device according to claim 1 or 2 **characterized in that** it is formed by at least one finger glove or ring arranged on a finger articulation, the at least one finger glove or ring comprising the sensor (10).

4. The pointing input device according to any of claim 1 to 3 **characterized in that** the sensor (10) comprises a communication module (14) configured to transmit to the personal computer digital signals (S) via a wireless link using laser, radio frequency or infrared technology, the digital signals (S) indicating at least position and curvature state of the finger enabling movement control of the cursor on the display screen.

5. The pointing input device according to claim 3 or 4 **characterized in that** the sensor (10) comprises a piezo electric detector configured to detect a transition from a bent to straight state and inversely of the finger, the communication module (14) being coupled to the piezo electric detector is further configured to transmit to the personal computer digital data related to said transition via a wireless link using laser, radio frequency or infrared technology.

6. The pointing input device according to any of claim 3 to 5 **characterized in that** the sensor (10) comprises an acceleration detector configured to detect a movement of the finger in the straight state, the communication module (14) being coupled to the acceleration detector is further configured to transmit to the personal computer digital data related to said movement via a wireless link using laser, radio frequency or infrared technology.

7. The pointing input device according to any of claim 3 to 6 **characterized in that** the sensor (10) is programmable in a way to activate the acceleration detector in one finger glove or ring worn on a specific finger, the communication module (14) transmitting to the personal computer digital data corresponding to the position and movement of the specific finger.

8. The pointing input device according to any of claim 3 to 5 **characterized in that** the sensor (10) of a least one additional finger glove or ring is programmable in a way to activate detection of the transition from the bent to straight state of the finger, said transition activating a mouse click function while the finger straight state corresponding to a mouse button hold function.

9. The pointing input device according to any of claim 3 to 8 **characterized in that** it comprises a first finger glove or ring worn on a first finger, the sensor (10m) being configured to detect a curvature state and a transition from a bent to straight state of the first finger, the detected curvature state enabling movement control of the cursor on the display screen when the first finger is in a straight state, a second finger glove or ring worn on a second finger, the sensor (10i) being configured to detect transition from a bent to straight state of the second finger, the detected transition activating the left click function when the second finger moves from a bent to a straight state, a third finger glove or ring worn on a third finger, the sensor (10r) being configured to detect transition from a bent to straight state of the third finger, the detected transition activating the right click function when the third finger moves from a bent to a straight state.

10. The pointing input device according to claim 9 **characterized in that** the finger gloves or rings are wearable at least over the articulation between the middle and proximal phalanx of the first, second and third finger.

11. The pointing input device according to claim 9 **characterized in that** configuration of the sensor (10) of each finger glove or ring is user programmable, the movement control of the cursor on the display screen, right and left click functions being set up for the finger glove or ring wearable on any finger.

12. The pointing input device according to claim 1 **characterized in that** the sensor (10) includes a camera directed to the fingers, the camera comprising a processor configured to analyze and process received images, to determine the curvature state of at least one finger and transition from a bent to a straight finger state and inversely and to determine, based on results of the analysis, spatial movement vectors data of a straight finger.

13. The pointing input device according to claim 12 **characterized in that** the camera is independent of the personal computer, the camera comprising a communication module (14) configured to transmit to the personal computer digital data either via a wired link using a Universal Serial Bus port, a High Definition Multimedia Interface) port or any other port supporting video data signals or via a wireless link using laser, radio frequency or infrared technology.

14. The pointing input device according to claim 12 **characterized in that** the camera is integrated in an upper edge of the display screen of a portable personal computer, the processor being part of the central processor of the portable personal computer.

15. The pointing input device according to anyone of claim 12 to 14 **characterized in that** the camera is configured to use markerless motion capturing techniques applied to the fingers moving within the visual field of the camera.
